# EUROPEAN PATENT APPLICATION

(11) **EP 1 369 246 A2**
(43) Date of publication of application: **10.12.2003**
(21) Application number: 03019651.3
(22) Date of filing: 19.09.2001
(51) Int. Cl.: B41J 2/175

(54) **Optional part for apparatus, apparatus having optional part, access device, method for distributing optional part and ink cartridge**

(30) Priority: 19.09.2000 JP 2000283456; 07.09.2001 JP 2001271525
(62) Divisional of application: 01121759.3
(71) Applicant: SEIKO EPSON CORPORATION, Tokyo 160-0811 (JP)
(72) Inventor: Naka, Takahiro, Seiko Epson Corp., Nagano-ken 392-8502 (JP)
(74) Representative: HOFFMANN - EITLE

(57) **Abstract**

An ink cartridge (19) comprising a container containing an ink therein and a storage device (21), into and from which data is contactlessly writable and readable, wherein said ink cartridge is packed in a manner that data is writable and readable into and from said storage device when the ink cartridge is packed. The ink cartridge may be decompressedly or hermetically packed. The ink may be deaerated. The storage device may comprise a first region for storing control information necessary for said recording apparatus to carry out a predetermined operation, and a second region for storing information on an amount of the ink contained in the ink cartridge.

## Description

### BACKGROUND OF THE INVENTION

The present invention relates to an apparatus such as a personal computer and a printer, and to a part, a consumption article or an accessory for the apparatus, which is sold separately from the apparatus. In this specification, the consumption article and the accessory are simply referred to as a "part" as a general term.

Description will be made below for the present invention with a printer taken as an example.

A printer is not in a usable state until a part sold separately from a printer body (for example, roll paper, an ink cartridge and the like) is fitted thereto. Since many of such optional parts are consumption articles, a user sometimes must go to a retail store to purchase the optional parts there.

As an example of such optional parts, an ink cartridge has been known, in which a semiconductor memory is fitted, various kinds of control information for use of ink is previously stored in the semiconductor memory, and in turn, a printer body reads the control information for use in controlling thereof. The semiconductor memory provided in the conventional ink cartridge is a contact-type memory having a metal terminal on a surface thereof, which comes in contact with a terminal of the printer body or the like to make the memory accessible.

Incidentally, many of the optional parts including the ink cartridge are readily portable and small-sized ones accommodable in a bag and the like. Therefore, these parts can be objects for shoplifting in a retail store in some cases. In order to prevent the shopliffing, some retail stores take measures including: displaying the optional parts in a place where a consumer cannot reach; or preparing and arranging cards, each displaying an article name for each optional part, then handing an actual article to the consumer in exchange for the card. However, taking the measures for prevention of the shoplifting as described above is burdensome and troublesome for the retail stores, and is inconvenient for the consumer since the actual article cannot be easily seen on hand before purchase.

Moreover, there is a request that not a manufacturer of the optional part but a distributor wholesaling or retailing the same wishes to customize data stored in the semiconductor memory. For example, in some cases each retail store writes information to provide its original service into a memory of the optional part at sale, and wishes to give a benefit or a convenience to the consumer who has purchased the optional part and to present features and the like of the retail store that appeals to the customer. Furthermore, a manufacturer of the optional part manufactures optional parts of plural type or for plural destinations so as to have the entirely same hardware configuration, and sometimes wishes to sell the optional part after writing control information including contents suitable for each type thereof or each destination into the memory when the optional part is wholesaled or retailed. However, since the conventional optional part having the contact-type memory has been already packed in a package when it is on a distribution channel, it is no longer possible to access the memory, and thus the foregoing request cannot be satisfied.

Hence, an object of the present invention is to prevent the shoplifting of the optional part without causing troubles to the retail store and inconvenience to the consumer.

Another object of the present invention is to enable a storage device of the optional part to be customized as desired on a distribution channel from the manufacturer to the consumer.

### SUMMARY OF THE INVENTION

An optional part of an apparatus according to a first aspect of the present invention includes a storage device for storing control information required for a predetermined operation of the apparatus in a state where the optional part is fitted thereto, the storage device being contactlessly (by use of a wireless signal such as a radio wave, light, and an ultrasonic wave) accessible in a distribution channel from a manufacturer to a consumer (or from outside of a package of the optional part). Here, storing the control information is, for example, any one of: (1) storing the control information in the storage device not having stored the control information; (2) in the storage device storing incorrect control information, changing the incorrect control information to correct control information; and (3) deleting operation prohibiting information from the storage device storing the operation prohibiting information for prohibiting the apparatus from performing the predetermined operation. The apparatus to which the optional part is fitted is not allowed to perform the predetermined operation unless the control information is stored in the storage device of the optional part. The storage device of the optional part can be accessed from the outside of the package of the optional part.

According to the present invention, it is possible to store the control information contactlessly in the storage device. Therefore, in the retail store, when the optional part is purchased, the control information can be stored in the storage device of the optional part from the outside of the package. Hence, since the control information is not stored in a shoplifted optional part, the apparatus does not operate even if the shoplifted optional part is fitted thereto. Accordingly, the shoplifting of the optional part can be prevented.

Moreover, since the control information can be stored in the storage device contactlessly, the storage device of the optional part can be customized as desired on the distribution channel. For example, when the manufacturer of the optional part manufactures optional parts of plural types or for plural destinations in the entirely same hardware configuration, and wholesales or retails the same, the manufacturer can write control information of the contents suitable for each type or each destination into the storage device from the outside of the package, and then can sell the same.

An apparatus according to a second aspect of the present invention includes an apparatus body and an optional part sold separately from the apparatus body. The optional part includes a storage device for storing control information required for a predetermined operation of the apparatus in a state where the optional part is fitted thereto, the storage device being contactlessly accessible from outside of a package. When the optional part is fitted to the apparatus body, the apparatus body performs the predetermined operation only when the control information is stored in the storage device of the optional part.

A device for accessing a storage device of an optional part according to a third aspect of the present invention is provided in a distributor of the optional part. The device includes an accessing element for contactlessly accessing a contactlessly-accessible storage device provided on an optional part of an apparatus, the optional part being sold separately from an apparatus body, and for storing control information in the storage device of the optional part, the control information being required for a predetermined operation of the apparatus in a state where the optional part is fitted thereto.

A method for distributing an optional part according to a fourth aspect of the present invention includes the steps of: contactlessly accessing a contactlessly-accessible storage device provided on the optional part in a distribution channel from a manufacturer manufacturing the optional part to a consumer; and storing control information in the storage device, the control information being required for a predetermined operation of the apparatus in a state where the optional part is fitted thereto.

### BRIEF DESCRIPTION OF THE DRAWINGS

Fig. 1 is a block diagram showing one example of an ink cartridge according to a first embodiment of the present invention and one example of a distribution channel therefor.
Fig. 2 is a block diagram showing an entire configuration of a print system according to the first embodiment of the present invention.
Fig. 3 is a flowchart of processing executed by a printing processing circuit 15 when an ink cartridge 19 is fitted.
Fig. 4 is a display screen of service provision data.
Fig. 5 is a view of printer roll paper having an EEPROM mounted thereon.
Fig. 6 is a block diagram showing one example of an ink cartridge according to a second embodiment of the present invention and one example of a distribution channel therefor.
Pigs. 7(A) and 7(B) are views of a procedure of decompressed packaging and the ink cartridge 19 decompressedly packed.
Fig. 8 is a view of the ink cartridge 19 decompressedly packed.
Fig. 9 is a flowchart of processing executed by the printing processing circuit 15 when an ink cartridge 19 is fitted.
Fig. 10 is a flowchart of processing executed by the printing processing circuit 15 when an ink cartridge 19 is fitted.
Fig. 11 is a flowchart of processing executed by the printing processing circuit 15 when a cleaning request is issued.
Fig. 12 is a flowchart of processing executed by the printing processing circuit 15 when the ink cartridge 19 is fitted.
Fig. 13 is a view of a cartridge EEPROM 21 divided into a plurality of storage regions.

### DETAILED DESCRIPTION OF THE PREFERRED EMBODIMENTS

The present invention can be applied to a part of every apparatus. Description will be made below for embodiments when the present invention is applied to an ink cartridge exchangeably fitted to an ink-jet printer that is a recoding apparatus, with reference to the drawings.

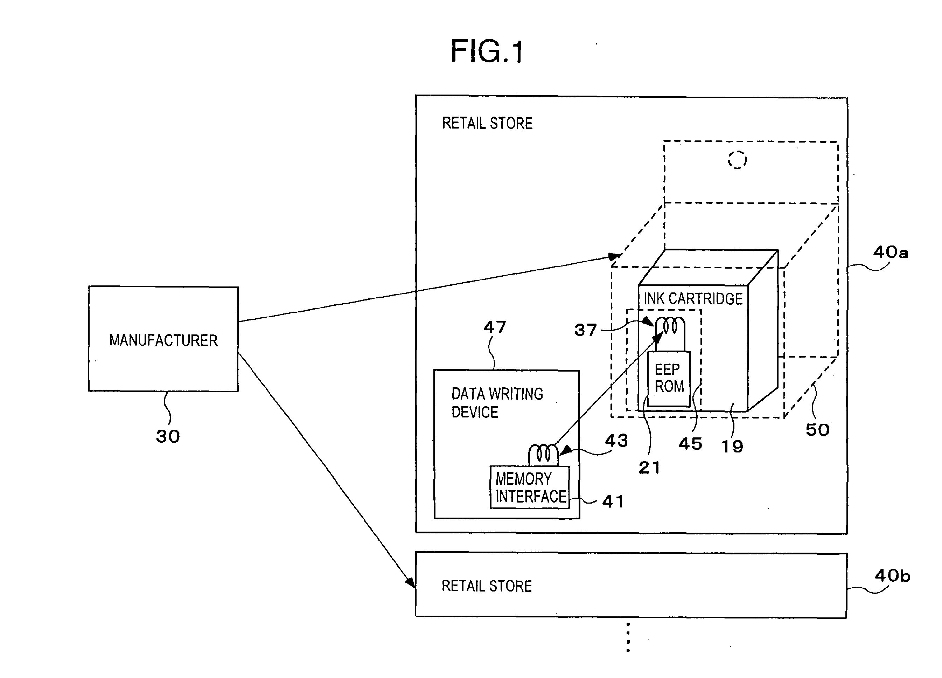

Fig. 1 shows one example of an ink cartridge according to a first embodiment of the present invention and one example of a distribution channel therefor.

In a manufacturer 30, onto an ink cartridge 19 according to this embodiment comprising a housing accommodating therein an ink container that is not shown in the drawings, mounted thereon are a nonvolatile storage medium, for example, an EEPROM (hereinafter, referred to as a "cartridge EEPROM") 21, and a coil 37 for accessing the cartridge EEPROM 21 contactlessly by electromagnetic induction. And, the ink cartridge 19 is packed in a predeterminied package 50. For example, the coil 37 is exposed on an outer surface of the ink cartridge 19 so as to be accessible to the cartridge EEPROM 21. And, the ink cartridge 19 is shipped from the manufacturer 30 to each of various retail stores 40a, 40b... such as a department store and an electrical store. Note that, in the manufacturer 30, into the EEPROM 21 of the ink cartridge 19, written are information regarding the ink cartridge 19, for example, a cartridge ID (for example, a manufacturing serial number) representing a type of the ink cartridge 19, a date of manufacture of the ink cartridge 19, and ink property information such as a type and a color in the ink cartridge 19.

Here the ink contained in the ink cartridge 19 is deaerated. "deaerated" here means a state in which air mixed in the ink (nitrogen and oxygen or the like) is removed. After doing this, air bubbles will not be easily generated in the ink. If air bubbles generated in the ink enter into an ink flowing passage of an ink-jet recording head, it sometimes will affects the ink ejecting property. Specifically, in a ink ejecting method in which volume of pressure chamber connected with an ink ejecting nozzle is changed for ejecting the ink, for example in a method employing a piezoelectric element, as a pressure generated by the change of the pressure chamber is absorbed by the air bubbles, it may cause the ink not to be ejected.

The package 50 is made of paper. Therefore, even if the ink cartridge 19 is still packed in the package 50, the cartridge EEPROM 21 can be accessed through the coil 37 of the ink cartridge 19 by interposing the package 50, thus data can be read out therefrom and written thereinto. In the case of an optical reading/writing system, the cartridge 19 can be accessed through a transparent window 45 of the package 50, thus the data can be read out therefrom and written thereinto.

In each of the retail stores 40a, 40b..., provided is a data writing device 47 writing predetermined data into the EEPROM 21 of the ink cartridge 19. The data writing device 47 includes a coil 43 for accessing the cartridge EEPROM 21 contactlessly by electromagnetic induction and a memory interface 41 for writing data into the cartridge EEPROM 21. The memory interface 41 supplies electric power to the cartridge EEPROM 21 or writes predetermined data into the cartridge EEPROM 21 through the transparent window 45 of the package 50 of the ink cartridge 19, for example, by an operation of an employee of the retail store at a predtermined time, for example, when a consumer purchases the ink cartridge 19 properly. As such data to be written, mentioned are purchase data representing that the ink cartridge 19 was purchased, service provision data for providing an original service of the store to the consumer (for example, confidential information that only the consumer having purchased the article at the retail store can get to know, such as a URL of a Web page from which a particular service is received) and the like.

A print system to be described later operates based on the data written into the cartridge EEPROM 21 in the manufacturer 30 and the retail stores 40a, 40b....

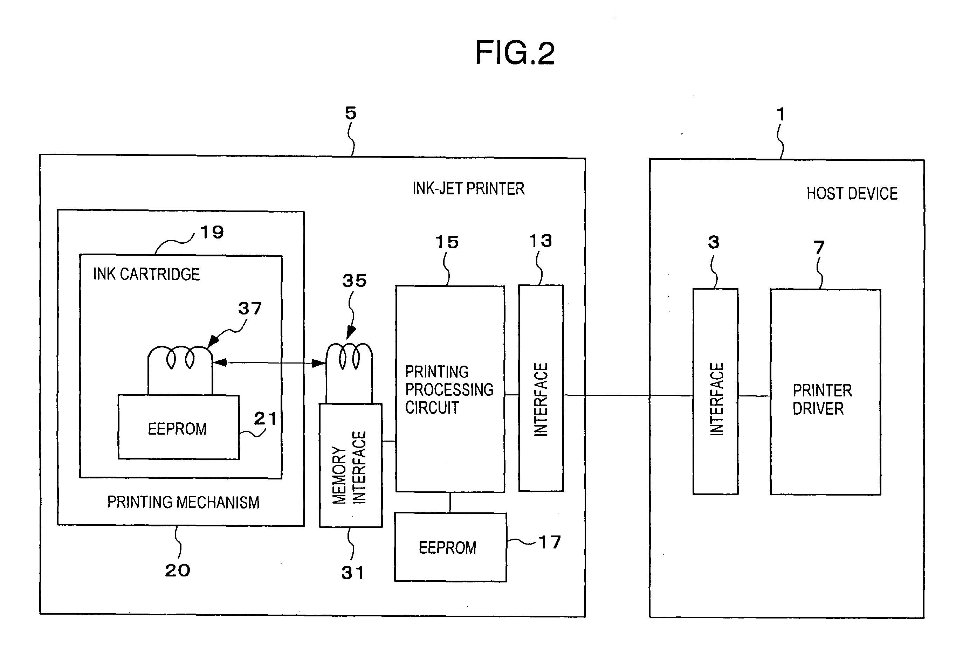

Fig. 2 is a block diagram showing an entire configuration of a print system according to the first embodiment of the present invention.

In Fig. 2, a host device 1 is connected to an ink-jet printer (hereinafter, referred to as a "printer") 5 through a printer interface circuit 3. This host device 1 is typically a general-purpose-type computer such as a personal computer, and includes a printer driver 7 as software for preparing print data to be sent to the printer 5.

The printer 5 is connected to the host device 1 through a host interface circuit 13, and the ink cartridge 19 is fitted thereto so as to be freely detachable. The printer 5 includes a memory interface 31, a printing processing circuit 15, and a printing mechanism 20.

The memory interface 31 includes a coil 35. Under control of the printing processing circuit 15, the memory interface 31 supplies electric power to the cartridge EEPROM 21, reads out data stored in the cartridge EEPROM 21, or writes data into the cartridge EEPROM 21 by electromagnetic induction between the coil 35 and a coil 37 of the cartridge EEPROM 21. As such data to be written, enumerated are a date of unsealing the ink cartridge 19 (that is, a date when the ink cartridge 19 is used for the first time), a current residual ink amount and the like.

Based on print data transferred from the host device 1 through the host interface circuit 13, the printing processing circuit 15 prepares a print image, controls paper feeding and so on. Though not shown, the printing processing circuit 15 includes a print head drive circuit, a motor drive circuit, a data writing circuit to the ink cartridge 19, an input/output circuit of external data, a CPU for controlling the entire printing processing circuit 15 and the like. Moreover, the printing processing circuit 15 includes a nonvolatile storage medium for storing particular data, for example, an EEPROM (hereinafter, referred to as a "printer EEPROM") 17. Though described later in detail, the printing processing circuit 15 controls the memory interface 31, reads out the data written into the cartridge EEPROM 21, and, based on the data, controls the operation of the printer 5 or the use of the ink cartridge 19.

The printing mechanism 20 prints the print image prepared by the printing processing circuit 15 under the control of the printing processing circuit 15. Though not shown, the printing mechanism 20 comprises a print head, a carriage, a paper feeding device, a head maintenance device and the like. The exchangeable ink cartridge 19 for supplying ink to the print head is fitted to the printing mechanism 20 so as to be freely detachable.

When the ink cartridge 19 is completely fitted to the printer 5, the coil 37 of the cartridge EEPROM 21 and the coil 35 of the memory interface 31 of the printer 5 can be electrically coupled to each other. Then, it is made possible for the printing processing circuit 15 to read out data from the cartridge EEPROM 21 or to write data thereinto through the memory interface 31.

In general, there are two types of ink cartridges: one is an on-carriage type in which an ink cartridge is mounted on a carriage together with a print head; and the other is an off-carriage type in which an ink cartridge is set in an unmoved place separate from a carriage. The ink cartridge 19 of this embodiment may be of any of the types. Moreover, it is possible to share the ink cartridge 19 with a plurality of printers in such a manner that, after the ink cartridge 19 is fitted to a certain printer and used to some extent, it is detached therefrom and fitted again to the other printer.

Hereinafter, description will be made for a flow of processing executed by the printing processing circuit 15 in the foregoing print system.

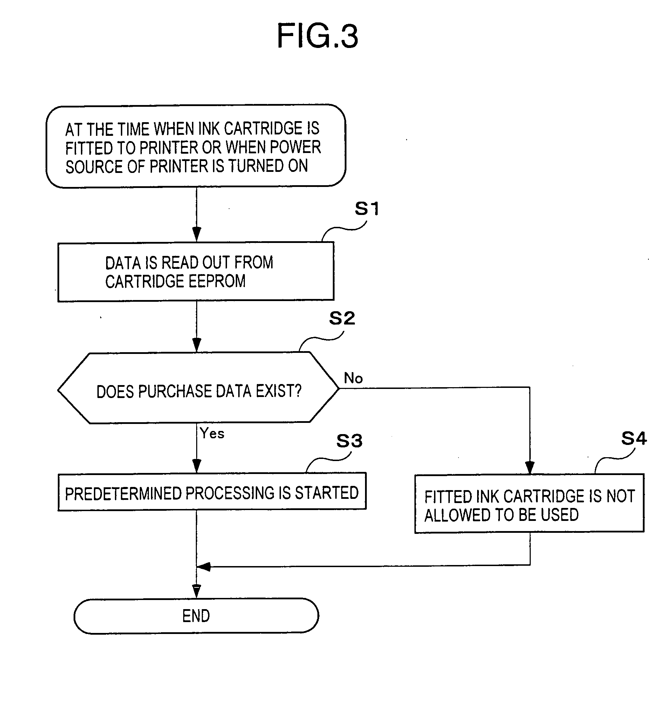

Fig. 3 shows a flow of processing executed by the printing processing circuit 15 during fitting of the ink cartridge 19.

At the time when the ink cartridge 19 is fitted to the printer 5, or at the time when a power source of the printer 5 is turned on, the printing processing circuit 15 reads out data recorded in the cartridge EEPROM 21 (step S1), then checks the existence of the purchase data (step S2). In this check, if the purchase data exists (Yes in step S2), predetermined processing such as filling the print head with ink in the ink cartridge 19 is started (step S3), and if the purchase data does not exist (No in step S2), a message to the effect that printing is not executed is displayed on a display of the host device 1, and printing is not allowed to be executed by use of the ink cartridge 19 (step S4). In this case, as such a message, sentences as below are mentioned for example: "Printing processing cannot be started because a record of purchase does not exist Please contact the retail store where you purchased this article."

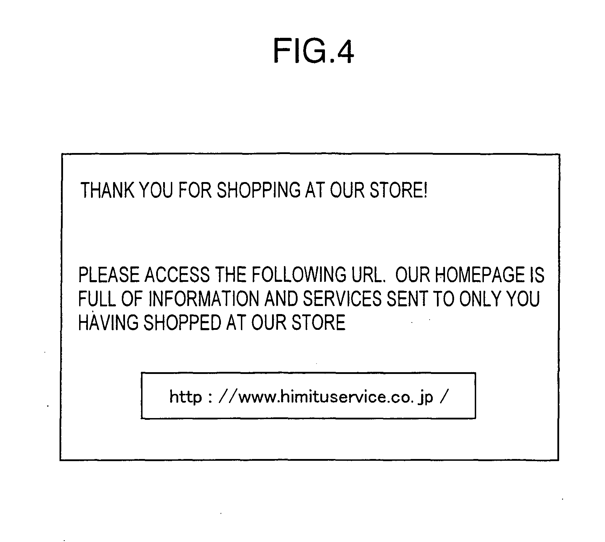

After the confirmation of the existence of the purchase data, the printing processing circuit 15 reads out the service provision data from the cartridge EEPROM 21 at a predetermined timing, and, based on the data, executes predetermined processing. For example, in the case where the service provision data read out is a URL of a Web page that only the consumer having purchased the article at the retail store can get to know, a message screen as shown in Fig. 4 is displayed on the display of the host device 1. If the consumer makes access to the URL, he/she can enjoy the original information and service of the retail store.

As above, description has been made for this embodiment. Note that, data communications of the data writing device 47 and the printer 5 with the cartridge EEPROM 21, that is, reading out data from the cartridge EEPROM 21 and writing data thereinto, are enabled by not only the contactless method using electromagnetic induction but also various methods, for example, optical communications using a light emitting element and a light receiving element.

In accordance with the above-described embodiment, when the ink cartridge 19 is properly purchased at each of the retail stores 40a, 40b..., the cartridge EEPROM 21 can be accessed contactlessly from the outside of the package 50, and the purchase data of the ink cartridge 19 can be written thereinto. The printer 5 having the ink cartridge 19 fitted thereto does not execute the printing processing using the ink cartridge 19 unless the purchase data is recorded in the cartridge EEPROM 21. Thus, even if the ink cartridge 19 is shoplifted and intended to be used, since the purchase data is not recorded in the shoplifted ink cartridge 19, the printer 5 does not operate. Specifically, since the shoplifted ink cartridge 19 cannot be used, the prevention of shoplifting of the ink cartridge 19 can be achieved.

Moreover, in accordance with the above-described embodiment, the cartridge EEPROM 21 can be customized as desired on the distribution channel from the manufacturer of the ink cartridge 19 to the consumer. For example, in each of the retail stores 40a, 40b..., the original service provision data can be written into the cartridge EEPROM 21. Thus, each of the retail stores 40a, 40b... can give a benefit and a convenience to the consumer having purchased the ink cartridge 19 there, and can present the features and the like thereof for appealing to the customer. Moreover, when the manufacturer of the ink cartridge 19 manufactures ink cartridges of plural types or for plural destinations in the entirely same hardware configuration, and wholesales or retails the same, the manufacturer can write information of the contents suitable for each type or each destination into the cartridge EEPROM, and then can sell the ink cartridge.

Next, description will be made for a second embodiment of the present invention. In this embodiment, description will be made mainly for points different from the first embodiment. In this embodiment, the case is shown, where various kinds of information are written into the cartridge EEPROM 21 while the ink cartridge is being distributed from the manufacturer thereof to the retail store, and the print system utilizes the information. This embodiment is suitable particularly for the case where a party manufacturing the ink cartridge and a party selling the same are different. For example, the case is of so-called OEM ( Original Equipment Manufacturing), in which a certain manufacturer supplies a product to the other manufacturer, and the manufacturer supplied therewith sells the product with a brand of its own. Alternatively, the case is where a certain manufacturer manufactures a product in a certain country, and an affiliate thereof in the other country sells the product. Here, description will be made for the case of the OEM or the case where a plurality of overseas affiliates sell the product, taken as examples.

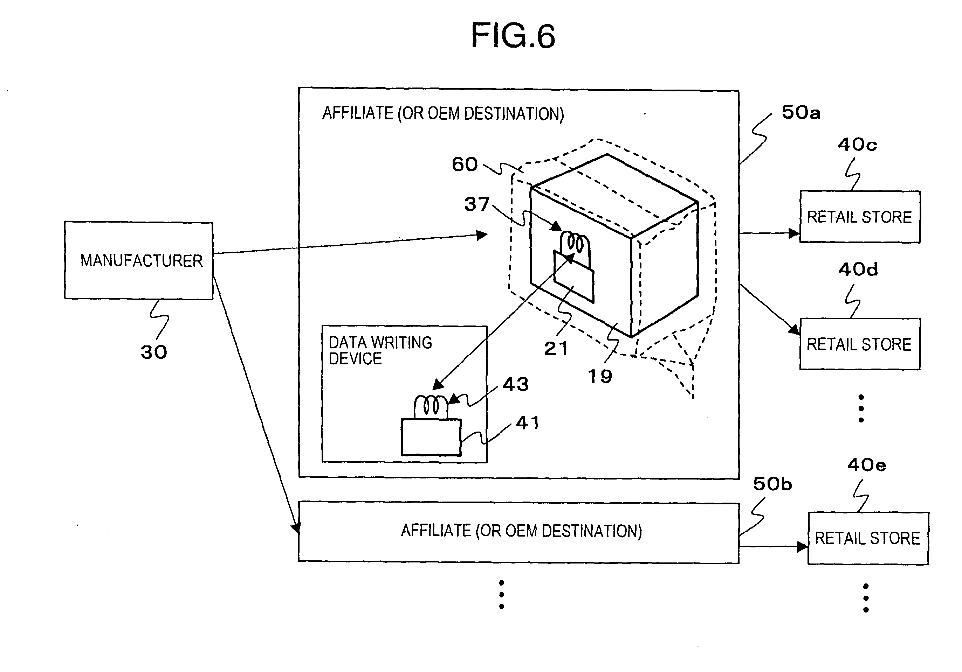

Fig. 6 shows an example of an ink cartridge according to the second embodiment of the present invention and an example of a distribution channel through an overseas affiliate (or OEM destination).

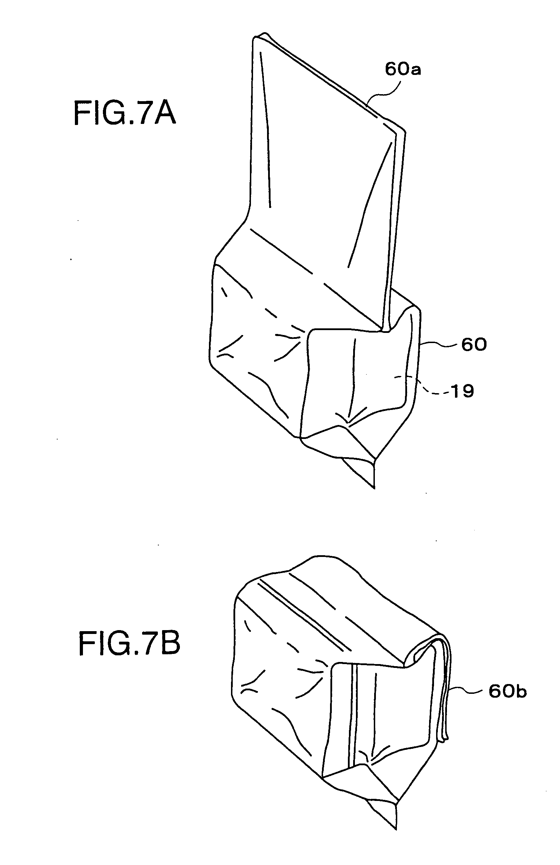

In this embodiment, to prevent evaporation of the ink contained in the ink cartridge 19 and contamination by leakage of the ink from the ink cartridge caused by any accidents, the ink cartridge 19 is hemetically packaged. When the ink contained in the ink cartridge is deaerated, it is decompressedly packed so as to prevent the air from blending into the ink cartridge and cause a reduction of the deaeration degree before the ink cartridge is used. The decompressed packaging of the ink cartridge will be described with reference to Figs. 7(A) and 7(B). As a packaging material for use in such packaging, a pouch 60 formed of a film having an air-blocking property is used. As shown in Fig. 7(A), the ink cartridge 19 is packed in the pouch 60. An opening 60a is sealed by thermal adhesion or the like in a decompressed state where the air in the pouch 60 is evacuated therefrom, and then the pouch 60 is decompressedly packed. After sealing the opening 60a, the rest 60b of the pouch 60 may be folded as shown in Fig. 7(B).

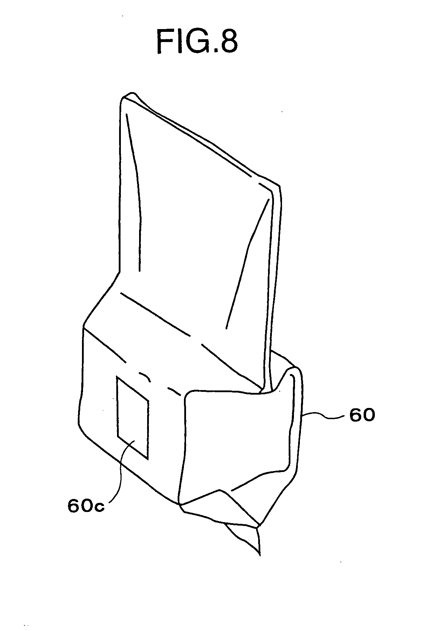

Similarly to the first embodiment, the cartridge EEPROM 21 is accessible contactlessly from the outside. Specifically, various kinds of information can be read out from the cartridge EEPROM 21 to the outside and written thereinto from the outside in the state where the ink cartridge is decompressedly packed. In the case where the cartridge EEPROM 21 is of an optical reading/writing system, as shown in Fig. 8, a transparent window 60c may be provided on the pouch 60, and the cartridge 19 may be accessed through the transparent window 60c for reading/writing of data.

Here, as information to be written into the cartridge EEPROM 21, for example, enumerated are: an affiliate ID as information for identifying each affiliate; a type ID as information for identifying a type of a printer for which the ink cartridge 19 is usable; a control condition for cleaning of a printer head as an operating condition during maintenance; and a drive condition of a printer head. The control condition for cleaning of a printer head is, for example, an ink amount absorbed during cleaning, an interval of the case where automatic cleaning is periodically performed for the head and the like. The drive condition of a printer head is an ink amount ejected when 1 dot is printed and the like. The control condition for cleaning or the drive condition of a head can be determined in response to a climate in a country or a region where the ink cartridge 19 is sold. The climate includes, for example, average values, maximum values, minimum values and the like of temperature, humidity, and precipitation.

Moreover, in the case of the OEM, a destination ID as information for identifying a company supplied with OEM articles is written into the cartridge EEPROM 21.

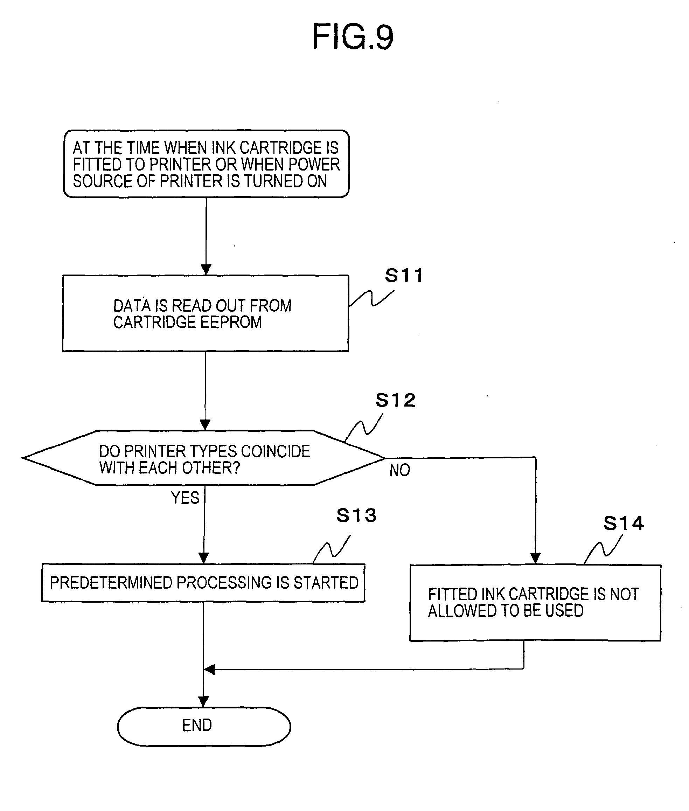

Similarly to the first embodiment, the print system shown in Fig. 2 operates based on the data written into the cartridge EEPROM 21. Description will be made for a flow of the processing executed by the printing processing circuit 15 in this embodiment for each of the data written into the cartridge EEPROM 21 with reference to Figs. 9 to 12.

Fig. 9 shows an example of a processing procedure in the case where a type ID of a printer is written into the cartridge EEPROM 21. In this case, the type ID of the printer 5 is previously stored in a printer EEPROM 17 connected to the printing processing circuit 15.

The printing processing circuit 15 reads out the data stored in the cartridge EEFROM 21 at the time when the ink cartridge 19 is fitted to the printer 5 or at the time when the power source of the printer 5 is turned on (step S11). The printing processing circuit 15 reads out the type ID of the printer 5, which is previously stored in the printer EEPROM 17, then checks whether the concerned type ID coincides with the type ID read out from the cartridge EEPROM 21 (step S12). In this check, if the type IDs coincide with each other (Yes in step S12), predetermined processing such as filling the print head with ink in the ink cartridge 19 is started (step S13), and if the type IDs do not coincide with each other (No in step S12), a message to the effect that printing is not executed, for example, "This ink cartridge cannot be used for the printer of this type", is displayed on a display of the host device 1, and printing is not allowed to be executed by use of the ink cartridge 19 (step S14). Thus, the ink cartridge can be set unusable for a printer of a type other than a predetermined type.

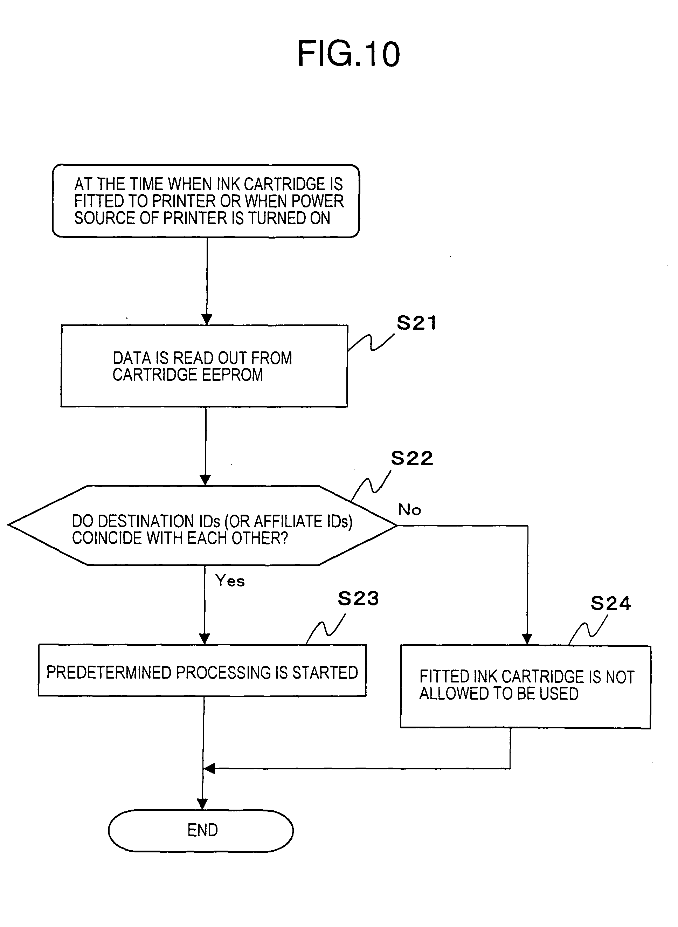

Fig. 10 shows an example of a processing procedure in the case where an OEM destination ID (or an affiliate ID) is written into the cartridge EEPROM 21. In this case, the destination ID (or the affiliate ID) corresponding to the printer 5 is previously stored in the printer EEPROM 17.

The printing processing circuit 15 reads out the data stored in the cartridge EEPROM 21 at the time when the ink cartridge 19 is fitted to the printer 5 or when the power source of the printer 5 is turned on (step S21). The printing processing circuit 15 reads out the destination ID (or the affiliate ID) previously stored in the printer EEPROM 17, then checks whether the concerned destination ID coincides with the destination ID read out from the cartridge EEPROM 21 (step S22). In this check, if the destination IDs (or the affiliate IDs) coincide with each other (Yes in step S22), predetermined processing such as filling the print head with ink in the ink cartridge 19 is started (step S23), and if the destination IDs do not coincide with each other (No in step S22), the message to the effect that printing is not executed, for example, "This ink cartridge cannot be used for the printer of this type.", is displayed on the display of the host device 1, and printing is not allowed to be executed by use of the ink cartridge 19 (step S24). Thus, only the ink cartridge sold by the predetermined OEM destination (or the affiliate) can be set usable.

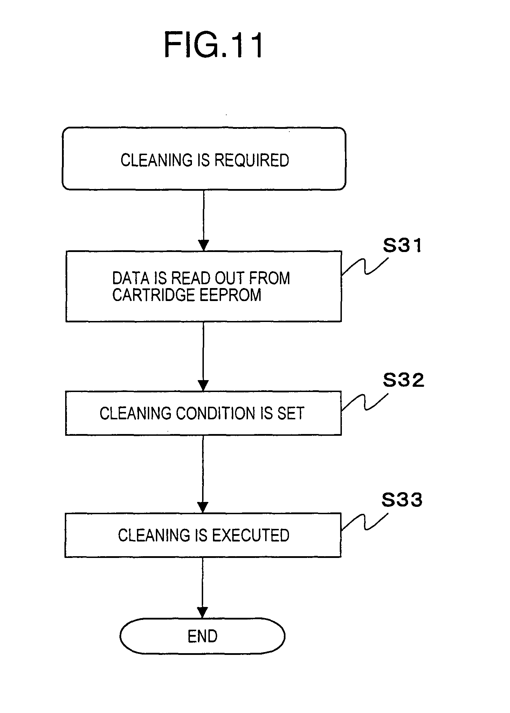

Fig. 11 shows an example of a processing procedure in the case where a control condition for cleaning is written into the cartridge EEPROM 21.

As shown in Fig. 11, the printing processing circuit 15 reads out the data stored in the cartridge EEPROM 21 upon receiving a cleaning request from a user (step S31), The printing processing circuit 15 analyzes the read-out control condition for cleaning. Then, based on such analysis, the printing processing circuit 15 sets a cleaning condition, for example, an amount of ink to be absorbed (step S32), and executes the cleaning in accordance with the set condition (step S33).

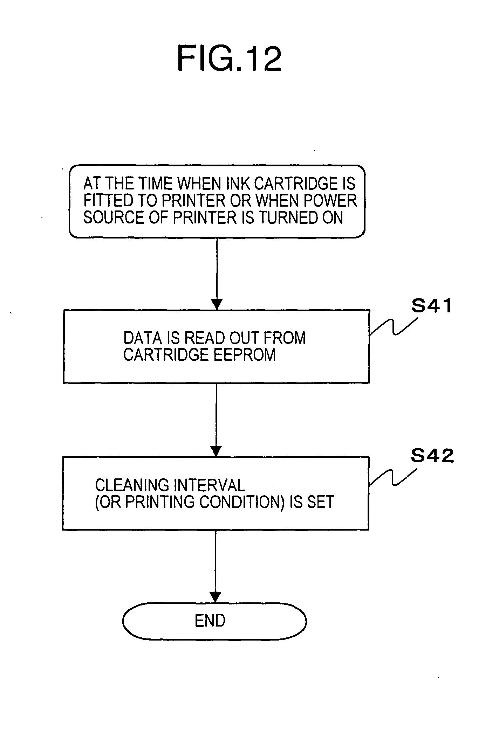

Fig. 12 shows processing when the ink cartridge 19 is fitted to the printer 5 or when the power source of the printer 5 is turned on in the case where a control condition for cleaning (or a printing condition) is written into the cartridge EEPROM 21.

The printing processing circuit 15 reads out the data recorded in the cartridge EEPROM 21 at the time when the ink cartridge 19 is fitted to the printer 5 or when the power source of the printer 5 is turned on (step S41). The printing processing circuit 15 analyzes the read-out control condition for cleaning (or a control condition for printing). Then, based on such analysis, the printing processing circuit 15 sets an interval of cleaning (or a printing condition) (step S42). Periodic automatic cleaning (or printing) after such setting is performed in accordance with the condition set here.

Thus, the operating condition of the printer such as the cleaning condition and the control condition for printing can be set by use of the control information stored in the cartridge EEPROM 21. Consequently, since various conditions can be set for each ink cartridge, the situation peculiar to the party selling the ink cartridge or to the region where the ink cartridge is sold can be reflected thereon. The foregoing situation is varied depending on a method of using a printer, climate and the like.

In the first and second embodiments, distribution information for use in the distribution process of the ink cartridge 19 may be written into the cartridge EEPROM 21. Such distribution information is information required for the distribution process, the information including, for example, a distribution channel indicating that through which distribution base the ink cartridge 19 is distributed and a date when the ink cartridge 19 passes through each distribution base.

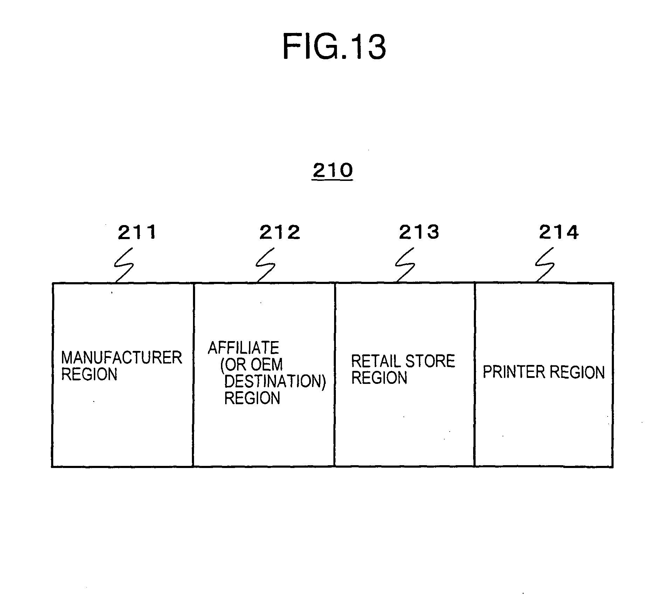

Furthermore, in the first and second embodiments, the storage region of the cartridge EEPROM 21 may be divided into a plurality of regions. And, for each piece of the control information, each storage region may be used individually. Alternatively, the storage region of the cartridge EEPROM 21 may be divided into the following regions as shown in Fig. 13: a region 211 into which the manufacturer writes data; a region 212 into which the affiliate (or the OEM destination) writes data; a region 213 into which the retail store writes data; and a region 214 into which the printer 5 writes data. The region 212 into which the affiliate (or the OEM destination) writes data and the region 213 into which the retail store writes data are regions used in the distribution channel. Each of the manufacturer, the affiliate (or the OEM destination), the retail store, and the printer 5 can read out the data in all of the regions 211, 212, 213, and 214. In the region 214 into which the printer 5 writes data, information representing the residual amount of ink is stored. The printer 5 updates the information regarding the residual amount of ink every time when ink is consumed.

As above, description has been made for the preferred embodiments of the present invention, However, the embodiments have been exemplified only for describing the present invention, and are not intended to limit the scope of the present invention only to the embodiments. It is possible to execute the present invention in other various aspects. Specifically, the present invention can be applied not only to the ink cartridge 19 but also to the apparatus body of the printer 5 or other consumption articles.

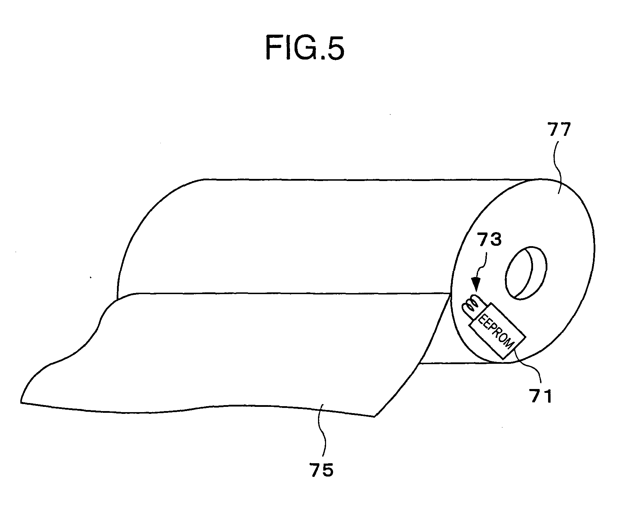

For example, in the case where a print sheet for the printer 5 is roll paper 75 as shown in Fig. 5, on a surface of a roll paper case 77, provided are an EEPROM (hereinafter, referred to as a "roll paper EEPROM") 71 and a coil 73 for accessing the roll paper EEPROM 71 by electromagnetic induction. And, on a package packing the roll paper 75 therein during shipment, a transparent window through which the coil 73 can be seen is provided so that the roll paper EEPROM 71 can be accessed even if it is still packed in the package. Meanwhile, a memory interface and a coil for reading out data from the roll paper EEPROM 71 and writing data thereinto are provided on a roll paper holder (not shown) of the printer 5.

In this embodiment, when the roll paper 75 is purchased, each of the retail stores 40a, 40b... accesses the roll paper EEPROM 71 contactlessly from the outside of the package of the roll paper 75 and writes the purchase data and the like by use of the data writing device 47. When the roll paper 75 is set on the roll paper holder of the printer 5, the printing processing circuit 15 reads out data from the roll paper EEPROM 71 by the memory interface provided on the roll paper holder. In the case where no purchase data exists, the printing processing is not allowed to be executed by use of the roll paper 75.

## Claims

1. An ink cartridge comprising a container containing an ink therein and a storage device, into and from which data is contactlessly writable and readable, wherein said ink cartridge is packed in a manner that data is writable and readable into and from said storage device when said ink cartridge has not been used.

2. The ink cartridge according to claim 1, wherein said ink cartridge is decompressedly packed.

3. The ink cartridge according to claim 1, wherein said ink cartridge is hermetically packed.

4. The ink cartridge according to claim 1, wherein said ink is deaerated.

5. The ink cartridge according to claim 1, to be used by being mounted onto a recording apparatus, wherein said storage device comprises:
a first region for storing control information necessary for said recording apparatus to carry out a predetermined operation; and
a second region for storing information on an amount of the ink contained in said ink cartridge.
